# EUROPÄISCHE PATENTSCHRIFT

(11) **EP 0 643 202 B1**
(45) Veröffentlichungstag und Bekanntmachung des Hinweises auf die Patenterteilung: **19.03.1997**
(21) Anmeldenummer: 94106277.0
(22) Anmeldetag: 22.04.1994
(51) Int. Cl.: F01N 7/08, F01N 7/18, F02M 35/10

(54) **Flansch zur Befestigung von Rohren an einem Motorblock**
Flange for fastening pipes to an engine block
Bride de fixation de tuyaux à un bloc moteur

(30) Priorität: 22.04.1993 DE 4313091
(43) Veröffentlichungstag der Anmeldung: 15.03.1995
(73) Patentinhaber: Erhardt Bischoff GmbH & Co KG, D-73655 Plüderhausen (DE)
(72) Erfinder: Krüger, Klaus, D-73568 Zimmerbach (DE)
(74) Vertreter: Patentanwälte Ruff, Beier, Schöndorf und Mütschele

(56) Entgegenhaltungen:
- DE-A- 4 214 796
- DE-U- 8 914 153
- FR-A- 2 292 920
- PATENT ABSTRACTS OF JAPAN vol. 9, no. 316 (M-438) 12. Dezember 1985 & JP-A-60 150 417 (YAMAHA YATSUDOKI) 8. August 1985

## Beschreibung

Die Erfindung betrifft einen Flansch, mit dessen Hilfe mindestens ein Rohr an einem Motorblock angebracht werden kann. Insbesondere soll es sich dabei um ein abgasführendes Rohr handeln. Es kann sich aber auch um ein Saugrohr oder ein anderes Rohr handeln.

Es ist bereits bekannt, einen Flansch zur Befestigung eines Abgasrohrs aus mehreren, aus Blech ausgestanzten Platinen herzustellen, die zur Bildung des Flanschs miteinander verbunden werden (EP-A 1-178 430).

Ebenfalls bekannt ist ein Flansch (DE-OS 37 17 989), der aus vier Platinen aufgebaut ist. Die beiden innenliegenden Platinen können Durchbrüche aufweisen. Mit Ausnahme der Gewichtsreduzierung ist keine andere Funktion genannt.

Weiterhin ist eine Vorrichtung zur Zuführung von Sekundärluft zu den Auspuffgasen bekannt (DE-U-89 14 153). Hier besteht ein Flansch aus mindestens drei miteinander verlöteten Platten, die den Auslaßkanälen der Brennkraftmaschine entsprechende Öffnungen aufweisen, in die Hülsen eingesetzt sind, an welche die Auspuffrohre anschließen. Alle drei Platten sind eben. In der mittleren Platte ist ein von den benachbarten Platten abgedeckter Kanal ausgestanzt. Dieser Kanal bildet einen Hohlraum zwischen der Dichtplatine und der äußeren Platine.

Der Erfindung liegt die Aufgabe zugrunde, einen Flansch zur Anbringung mindestens eines Rohrs an einem Motorblock im Hinblick auf seine Gebrauchsfähigkeit weiter zu verbessern. Insbesondere soll der Flansch eine kostengünstige Möglichkeit für die Sekundärluftzuführung und/oder die Abgasrückführung in den Zylinderkopf ermöglichen.

Zur Lösung dieser Aufgabe schlägt die Erfindung einen Flansch mit den Merkmalen des Anspruchs 1 vor. Weiterbildungen sind Gegenstand der Unteransprüche.

Unter abgedichtet soll dabei verstanden werden, daß die Verbindung zwischen der Haube und der Dichtplatine und/oder dem Rohr gasdicht ist und daß nur an bestimmten Stellen durch Öffnungen ein Zugriff auf den Hohlraum erfolgen kann.

Der zwischen der Dichtplatine und der Haube gebildete Hohlraum kann für die unterschiedlichsten Zwecke verwendet werden.

Normalerweise werden Flansche an den Motorblöcken angeschraubt. Zu diesem Zweck haben die Motorblöcke üblicherweise Stehbolzen und die Flansche Öffnungen, so daß die Flansche auf die Stehbolzen aufgeschoben und dort mit Muttern festgeschraubt werden. Die Befestigungslöcher können dabei für jeden Stehbolzen als kreisrundes Loch ausgebildet sein. Es ist jedoch ebenfalls möglich, daß die Befestigungslöcher Langlöcher sind oder seitlich offen, also schlitzartig.

Da die Erfindung sich aber mit der Schaffung eines Hohlraums zwischen einer Dichtplatine und einer Haube befaßt, soll die Erfindung auch bei Flanschen anwendbar sein, die auf andere Weise am Motorblock befestigt werden, beispielsweise durch Schweißen.

Die Erfindung schlägt vor, daß die Haube mit der Dichtplatine verschweißt sein kann. Dies stellt eine Möglichkeit der gasdichten Verbindung dar. Ebenfalls möglich ist eine Verbindung durch eine Verlötung, wobei die Erfindung eine Spaltgasverlötung als bevorzugte Befestigungsart vorschlägt.

Der zwischen der Dichtplatine und der Haube gebildete Hohlraum ermöglicht es einerseits, Luft in den Zylinderkopf einzublasen und andererseits, Abgas zu entnehmen.

In Weiterbildung der Erfindung ist vorgesehen, daß die Haube als Tiefziehteil ausgebildet ist, insbesondere aus Blech besteht. Dies macht niedrige Herstellungskosten möglich.

In Weiterbildung der Erfindung kann vorgesehen sein, daß die Haube mindestens teilweise flächig an der Dichtplatine anliegt, was zur Herstellung einer stabilen Verbindung vorteilhaft ist. Die flächige Anlage kann erfindungsgemäß insbesondere im Randbereich des Flanschs vorgesehen sein.

In nochmaliger Weiterbildung der Erfindung kann vorgesehen sein, daß die Haube insbesondere im Bereich der Befestigungslöcher flächig an der Dichtplatine anliegt.

Erfindungsgemäß kann vorgesehen sein, daß die Dichtplatine mindestens eine Öffnung aufweist, die in den abgedichteten Hohlraum mündet. Diese Öffnung in der Dichtplatine kann beispielsweise mit einer Öffnung im Zylinderkopf zum Einblasen von Sekundärluft fluchten.

Erfindungsgemäß kann vorgesehen sein, daß die Haube mindestens einen Anschlußstutzen aufweist, der in den Hohlraum führt. Dieser Anschlußstutzen kann beispielsweise zur Anbringung eines Steuerventils der Sekundärlufteinblasung dienen. Ebenfalls möglich ist der Anschluß einer Abgasrückführungsleitung.

Erfindungsgemäß kann vorgesehen sein, daß der Hohlraum insbesondere in einem das zu befestigende Rohr umgebenden Raum angeordnet ist. Es kann vorgesehen sein, daß die Haube in diesem Bereich auch an dem Rohr befestigt, insbesondere verschweißt oder verlötet ist. Selbstverständlich ist es auch möglich, daß auch in diesem Bereich die Haube an der Dichtplatine befestigt ist.

Weitere Merkmale, Einzelheiten und Vorzüge ergeben sich aus den Patentansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Fig. 1: eine Aufsicht auf einen Flansch zur Anbringung von vier Rohren;
- Fig. 2: einen vergrößerten Querschnitt durch den Flansch;
- Fig. 3: einen Teilschnitt durch den Flansch an der Stelle einer Befestigungsöffnung.

Der in den Figuren dargestellte Flansch zur Befestigung mehrerer Abgasrohre 1 enthält eine rechteckige Dichtplatine 2. Diese Dichtplatine wird an einer entsprechend geformten Fläche eines Zylinderkopfs angeschraubt, beispielsweise mit Schrauben oder mit auf Stehbolzen aufgeschraubten Muttern. Zu diesem Zweck enthält die Dichtplatine Befestigungslöcher 3, die derart angeordnet sind, daß sie den Stehbolzen oder den Gewindelöchern für die Schrauben entsprechen. Weiterhin enthält die Dichtplatine 2 im dargestellten Beispiel vier Öffnungen, in denen jeweils ein Abgasrohr 1 angebracht werden kann.

Auf der von dem Zylinderkopf abgewandten Seite der Dichtplatine 2 ist eine Haube 5 angebracht und vorzugsweise durch eine Spaltgasverlötung befestigt. Die Haube 5 weist im wesentlichen den gleichen Außenumfang wie die Dichtplatine 2 auf. Sie ist mit einem Randbereich 6 versehen, in dem die Haube 5 entsprechend der Außenfläche der Dichtplatine 2 ausgebildet ist, im dargestellten Beispiel eben. In einem mittleren Bereich 7 weist dagegen die Haube 5 eine Form auf, in der sie einen Abstand von der Dichtplatine 2 aufweist. Dadurch wird zwischen der Haube 5 und der Dichtplatine 2 ein Hohlraum 8 gebildet.

Auch die Haube 5 weist Befestigungslöcher 9 auf, die in ihrer Anordnung und Größe den Befestigungslöchern 3 der Dichtplatine 2 entsprechen.

Die Haube 5 weist ebenfalls Öffnungen 10 auf, die den Öffnungen 4 der Dichtplatine 2 in Größe und Anordnung entsprechen.

Im Bereich der Öffnungen 4 für das zu befestigende Abgasrohr 1 ist die Haube 5 derart ausgebildet, daß sie einen zylindrischen Abschnitt 11 aufweist, dessen Stirnkante mit der Dichtplatine 12 verbunden, insbesondere verlötet ist. Auf diese Weise kann der Hohlraum 8 nahe an das Abgasrohr 1 herangeführt werden.

Es wäre auch möglich, in dem das Abgasrohr 1 umgebenden Bereich die Haube 5 ohne den Zylindermantel 11 direkt an dem Abgasrohr 1 anzubringen.

Die Dichtplatine 3 weist ein Loch 12 auf, das derart angeordnet ist, daß es mit einer in dem Zylinderkopf ausmündenden Leitung für eine Sekundärlufteinblasung übereinstimmt. Das Loch 12 in der Dichtplatine 2 mündet in den Hohlraum 8. Durch den Hohlraum 8 kann man also zu dem Loch 12 gelangen.

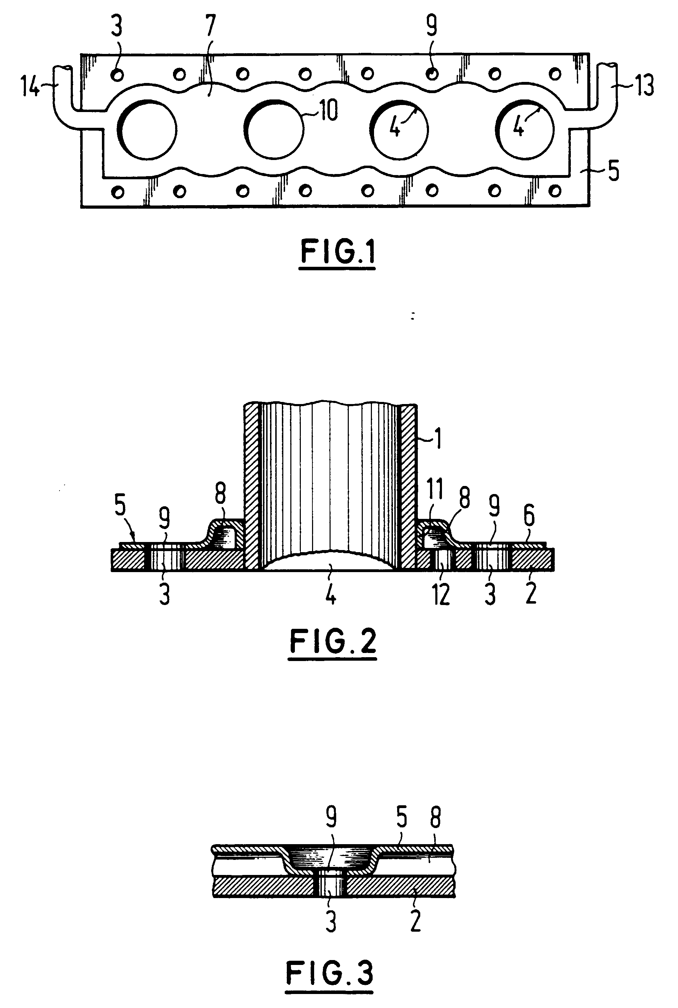

Wie sich aus Fig. 1 ergibt, sind an der Haube 5 im Bereich der kurzen Stirnseiten zwei Leitungen 13, 14 angelötet, wobei die weiterführende Leitung nicht dargestellt ist. Beispielsweise kann an der Leitung 13 die Abgasrückführungsleitung angeschlossen werden.

An der Leitung 14 kann beispielsweise das Steuerventil der Sekundärlufteinblasung angebracht werden.

Fig. 3 zeigt einen Schnitt durch einen Bereich, wo sowohl die Haube 5 als auch die Dichtplatine 2 je ein Befestigungsloch 9, 3 aufweisen. In diesem Bereich ist die Haube 5 so verformt, daß sie flächig an der Dichtplatine 2 anliegt.

Während bei dem dargestellten Beispiel nur von einem Hohlraum die Rede ist, ist es selbstverständlich auch möglich, die Haube so auszugestalten, daß zwei voneinander getrennte Hohlräume in der Flanschverbindung gebildet werden. Diese können dann auch zu unterschiedlichen Zwecken verwendet werden.

## Patentansprüche

1. Flansch zur Anbringung mindestens eines Rohrs (1) an einem Motorblock, mit einer Dichtplatine (2), die je eine Öffnung (4) für jedes anzubringende Rohr (1) aufweist, sowie mit einer mit der Dichtplatine (2) verbundenen Platine, die mit jeder Rohröffnung (4) der Dichtplatine (2) je eine übereinstimmende Öffnung (10) aufweist und zwischen sich und der Dichtplatine (2) einen abgedichteten Hohlraum (8) bildet, dadurch gekennzeichnet, daß die Platine als Haube (5) ausgebildet ist, die als Tiefziehteil ausgebildet ist.

2. Flansch nach Anspruch 1, bei dem die Dichtplatine (2) Befestigungslöcher (3) und die Haube (5) mit den Befestigungslöchern (3) der Dichtplatine übereinstimmende Befestigungslöcher (9) aufweist.

3. Flansch nach Anspruch 1 oder 2, bei dem die Haube (5) mit der Dichtplatine (2) verschweißt ist.

4. Flansch nach Anspruch 1 oder 2, bei dem die Haube (5) mit der Dichtplatine (2) verlötet ist.

5. Flansch nach einem der vorhergehenden Ansprüche, bei dem die Haube (5) mindestens teilweise flächig an der Dichtplatine (2) anliegt, insbesondere in ihrem Randbereich.

6. Flansch nach einem der Ansprüche 2 bis 5, bei dem die Haube (5) im Bereich der Befestigungslöcher (3, 9) flächig an der Dichtplatine (2) anliegt.

7. Flansch nach einem der vorhergehenden Ansprüche, bei dem die Dichtplatine (2) mindestens eine Öffnung (12) aufweist, die in den abgedichteten Hohlraum (8) mündet.

8. Flansch nach einem der vorhergehenden Ansprüche, bei dem die Haube (5) mindestens einen Anschlußstutzen (13, 14) aufweist, der in den Hohlraum (8) führt.

9. Flansch nach einem der vorhergehenden Ansprüche, bei dem das Rohr (1) an der Dichtplatine (2) und ggf. an der Haube (5) befestigt ist.

## Claims

1. Flange for fastening at least one pipe to an engine block, with a sealing blank (2), which has an opening (4) for each pipe (1) to be fastened, as well as with a blank, connected to the sealing blank (2), which has an opening (10) coinciding with each pipe opening (4) of the sealing blank (2) and which between it and the sealing blank (2) forms a sealed cavity (8), characterized in that the blank is constructed as a cover (5), which is in the form of a deep-drawn part.

2. Flange according to claim 1, wherein the sealing blank (2) has fastening holes (3) and the cover (5) has fastening holes (9) coinciding with the fastening holes (3) of the sealing blank.

3. Flange according to claim 1 or 2, in which the cover (5) is welded to the sealing blank (2).

4. Flange according to claim 1 or 2, wherein the cover (5) is soldered to the sealing blank (2).

5. Flange according to one of the preceding claims, wherein the cover (5) at least partly engages flat on the sealing blank (2), particularly in its marginal region.

6. Flange according to one of the claims 2 to 5, wherein in the vicinity of the fastening holes (3, 9), the cover (5) engages flat on the sealing blank (2).

7. Flange according to one of the preceding claims, wherein the sealing blank (2) has at least one opening (12) issuing into the sealed cavity (8).

8. Flange according to one of the preceding claims, wherein the cover (5) has at least one spigot (13, 14) leading into the cavity (8).

9. Flange according to one of the preceding claims, wherein the pipe (1) is fastened to the sealing blank (2) and optionally to the cover (5).

## Revendications

1. Bride pour fixer au moins un tuyau (1) à un bloc moteur, comprenant une platine d'étanchéité (2) présentant un orifice (4) pour chacun des tuyaux (1) à fixer, ainsi qu'une platine, solidaire de la platine d'étanchéité (2), qui présente, pour chacun des orifices (4) de la platine d'étanchéité (2), un orifice (10) correspondant et forme un espace creux étanché (8) entre elle et la platine d'étanchéité (2), laquelle bride est caractérisée en ce que la platine est réalisée sous la forme d'un recouvrement (5) lui-même réalisé sous la forme d'une pièce d'emboutissage.

2. Bride selon la revendication 1, dans laquelle la platine d'étanchéité (2) présente des trous de montage (3) et le recouvrement (5), des trous de montage (9) correspondant aux trous de montage (3) de la platine d'étanchéité.

3. Bride selon la revendication 1 ou 2, dans laquelle le recouvrement (5) est soudé à la platine d'étanchéité (2).

4. Bride selon la revendication 1 ou 2, dans laquelle le recouvrement (5) est fixé par brasage à la platine d'étanchéité (2).

5. Bride selon l'une des revendications précédentes, dans laquelle le recouvrement (5) est en contact, au moins en partie, par sa surface, avec la platine d'étanchéité (2), en particulier au niveau de ses bords.

6. Bride selon l'une des revendications 2 à 5, dans laquelle le recouvrement (5) est en contact, par sa surface, avec la platine d'étanchéité (2) au niveau des trous de montage (3, 9).

7. Bride selon l'une des revendications précédentes, dans laquelle la platine d'étanchéité (2) présente au moins une ouverture (12) donnant dans l'espace creux étanché (8).

8. Bride selon l'une des revendications précédentes, dans laquelle le recouvrement (5) présente au moins un ajutage (13, 14) qui débouche dans l'espace creux (8).

9. Bride selon l'une des revendications précédentes, dans laquelle le tuyau (1) est fixé à la platine d'étanchéité (2) et facultativement, au recouvrement (5).
